# EUROPÄISCHE PATENTSCHRIFT

(11) **EP 2 980 166 B1**
(45) Veröffentlichungstag und Bekanntmachung des Hinweises auf die Patenterteilung: **07.06.2017**
(21) Anmeldenummer: 14179500.5
(22) Anmeldetag: 01.08.2014
(51) Int. Cl.: C09D 5/00

(54) **Antikorrosive Beschichtungszusammensetzung**
Anticorrosive coating composition
Composition de revêtement anticorrosion

(43) Veröffentlichungstag der Anmeldung: 03.02.2016
(73) Patentinhaber: EWALD DÖRKEN AG, 58313 Herdecke (DE)
(72) Erfinder: Walter, Susanne, 58313 Herdecke (DE); Grossmann, Verena, 58313 Herdecke (DE); Roth, Marcel, 40589 Düsseldorf (DE); Reusmann, Gerhard, 45259 Essen (DE); Böhm, Sandra, 58256 Ennepetal (DE); Battaglia, Carolina, 58097 Hagen (DE)
(74) Vertreter: Von Rohr Patentanwälte Partnerschaft mbB

(56) Entgegenhaltungen:
- WO-A2-2005/090502
- US-A1- 2004 062 873
- US-A1- 2013 048 917

## Beschreibung

Die Erfindung betrifft eine antikorrosive Beschichtungszusammensetzung mit Metallpartikeln, ein Verfahren zum Herstellen dieser Beschichtungszusammensetzung, und ein mit dieser Beschichtungszusammensetzung beschichtetes Werkstück.

Beschichtungszusammensetzungen, die antikorrosiv wirken und die Metallpartikel enthalten sind an sich bekannt, z. B. aus der WO 2005/090 502. Sie enthalten im Wesentlichen Metallpartikel für den kathodischen Korrosionsschutz, meist Zink- und / oder Aluminiumpartikel oder Zinklegierungspartikel sowie Bindemittel in Gegenwart von Wasser und/oder Lösungsmittel. Die Bindemittel basieren oft auf siliziumhaltigen Verbindungen; typische Bindemittel sind anorganische Mono-, Oligo- oder Polymere wie z. B. Silikate, Silane oder Silanole, aber auch Siloxan. Geeignet sind -je nach Verwendungszweck auch organische Bindemittel, ggf. auch als Co-Polymere der anorganischen Bindemittel.

Die WO 2005/090502 A2 betrifft zudem ein Bindemittel, aufweisend ein wässriges, filmbildendes, polymeres Siloxan sowie ein unter Verwendung dieses Bindemittels hergestelltes Beschichtungsmittel sowie ein unter Verwendung des Beschichtungsmittels beschichtettes Werkstück.

Weiterhin betrifft die US 2013/0048917 A1 eine Zusammensetzung zur Verhinderung von Korrosionen, welche umfasst: Partikel eines Opfermetalls, welche edler sind als das Metallsubstrat, welches mit der Zusammensetzung in Kontakt steht; ein kohlenstoffhaltiges Material, welches einen elektrischen Kontakt zwischen den Partikeln des Opfermetalls herstellen kann; und Mittel zur Bereitstellung eines Korrosionsschutz-Beschichtungsmaterials für ein Metallsubstrat. Die Zusammensetzung ist zur Beschichtung der Oberfläche eines Metallsubstrates geeignet.

Die US 2004/0062873 A1 beschreibt ein Verfahren zur Beschichtung eines Metallstreifens. Der Streifen oder optional Sektionen des Streifens, welche aus dem Streifen in einem nachfolgenden Prozess hergestellt werden, werden zunächst mit einer Korrosionsschutzbeschichtung und anschließend mit mindestens einer Schicht einer farbähnlichen Beschichtung, welche Polymere enthält, beschichtet. Nachdem der Streifen mit der wenigstens einen Korrosionsschutzbeschichtung oder mit der wenigstens einen farbähnlichen Beschichtung beschichtet wurde, wird der Streifen in Sektionen aufgeteilt. Die beschichteten Sektionen werden dann geformt, vereinigt und/oder mit mindestens einer anderen farbähnlichen Beschichtung oder einer Farbbeschichtung beschichtet.

Während die Beschichtungszusammensetzungen nach dem Aushärten auf einem Werkstück oft einen guten Korrosionsschutz bieten, stellt sich deren Stabilität während des Gebrauchs als problematisch dar, da einige der vorgenannten Komponenten mit der Flüssigkeit der Beschichtungszusammensetzung oder mit den zu beschichtenden Werkstücken reagieren. Es können auch durch das Ein- und Ausbringen von Werkstücken aus einem Tauchbad Verunreinigungen eingeschleppt werden, so dass während der Beschichtung unerwünschte Nebenreaktionen auftreten, die die Nutzungsdauer des Tauchbades reduzieren. Ohne einen Stabilisator, der diese unerwünschten Nebenreaktionen unterbindet, beträgt die Gebrauchsdauer einer Beschichtungszusammensetzung oft nur wenige Stunden. Ein Ansatz einer Beschichtungszusammensetzung, z. B. für einen Coil-Coating-Prozess, soll mindestens 48 Stunden ohne Qualitätsverlust einsetzbar sein, ein Ansatz für ein Tauchbad wenn möglich eine Woche oder länger.

Bisher wurde zur Stabilisierung von Beschichtungszusammensetzungen, die Metallpartikel enthalten, Borsäure oder eine andere borhaltige Verbindung eingesetzt. Aufgrund von toxikologischen Bedenken gegenüber Borverbindungen und gesetzlicher Vorschriften wird dies in der Zukunft nicht mehr möglich sein.

Es ist also Aufgabe der Erfindung, eine Beschichtungszusammensetzung bereitzustellen, die eine akzeptable Nutzungsdauer gewährleistet, ohne dass die Zusammensetzung des Tauchbades eine borhaltige Verbindung aufweist.

Diese Aufgabe löst die Beschichtungszusammensetzung nach Anspruch 1 und das Verfahren zum Herstellen einer Beschichtungszusammensetzung nach Anspruch 11 sowie das Werkstück nach Anspruch 13. Vorteilhafte Weiterbildungen der Erfindung sind in den Unteransprüchen beansprucht.

Gegenstand der vorliegenden Erfindung ist somit eine antikorrosive Beschichtungszusammensetzung enthaltend die Komponenten:
(I) Metallpartikel
(II) Bindemittel und
(III) eine Sauerstoffverbindung oder eine Mischung von Sauerstoffverbindungen der Nebengruppenelemente in Form eines Salzes der Säure eines Übergangsmetalls oder eines Oxids eines Übergangsmetalls oder einer Mischung eines Salzes einer Säure eines Übergangsmetalls und eines Oxids eines Übergangsmetalls, wobei das Übergangsmetall ausgewählt ist aus Vanadium, Niob, Tantal, Chrom, Molybdän, Wolfram, Mangan und Rhenium,
in Gegenwart einer Flüssigkeit.

Als Metallpartikel sind die auch schon vorstehend bei der Erläuterung des Standes der Technik genannten Metallpartikel geeignet. Verwendet werden vor allem Zinkpartikel, Mischungen von Zink mit anderen Metallpartikeln und Zinklegierungspartikel. Aber auch Aluminium, Magnesium und Zinn werden, ebenfalls separat oder in Mischung, für die erfindungsgemäße Beschichtungszusammensetzung eingesetzt. Die Metallpartikel verleihen der durch die Beschichtungszusammensetzung erzeugten Beschichtung kathodischen Korrosionsschutz.

Als Bindemittel werden beispielsweise Silane, Silanole, Silikate, titan- oder zirkonbasierte Bindemittel, Siloxane, Acrylate, Polyurethane, epoxidbasierte Bindemittel wie z. B. Polyepoxide, Polyether, Polyester, deren Mischungen oder Mischungen dieser Bindemittel mit anderen als den vorgenannten Bindemitteln eingesetzt. Bei Mischungen von Bindemitteln wird häufig ein Haupt-Bindemittel benannt und weitere Bindemittel werden als Co-Bindemittel oder Co-Binder bezeichnet. Die für den Korrosionsschutz geeigneten Bindemittel sind dem Fachmann bekannt. Er wählt hier aus einer Vielzahl verfügbarer Bindemittel aus.

Beansprucht wird eine Beschichtungszusammensetzung, die eine Flüssigkeit enthält. Bevorzugt ist dies Wasser. Geeignet sind aber auch alle anderen bekannten Lösungsmittel. Es werden hier nur beispielsweise bevorzugte Lösungsmittel wie Alkohole, Ether, Glykolether, Ketone, aromatische oder aliphatische Verbindungen aber auch Monomere von Bindemitteln, z. B. Silane genannt. Da nach Möglichkeit angestrebt wird, ein Beschichtungsmittel herzustellen, dass wenig oder keine flüchtigen organischen Verbindungen aufweist, weist die erfindungsgemäße Beschichtungszusammensetzung als Flüssigkeit bevorzugt Wasser oder eine überwiegend wässrige Flüssigkeit auf, die Anteile organischer Lösungsmittel oder Monomere enthält.

Die vorstehend beschriebenen Komponenten I (Metallpartikel) und II (Bindemittel) bilden in Gegenwart von Flüssigkeit bereits eine antikorrosive Beschichtungszusammensetzung, die vielfach industriell verwendet wird. Erfindungswesentlich ist der Zusatz einer Sauerstoffverbindung oder einer Mischung von Sauerstoffverbindungen der Nebengruppenelemente zu einer solchen Beschichtungszusammensetzung. Bevorzugt werden solche Sauerstoffverbindungen in der höchsten Oxidationsstufe eingesetzt. Erfindungsgemäße Sauerstoffverbindungen sind Salze der Säure eines Übergangsmetalls sowie Oxide eines Übergangsmetalls, wobei das Übergangsmetall ausgewählt ist aus Vanadium, Niob, Tantal, Chrom, Molybdän, Wolfram, Mangan und Rhenium.

Insbesondere ein Alkali- oder Erdalkalisalz, ein Ammoniumsalz oder ein Oxalat von Elementen der dritten, vierten, fünften, sechsten oder siebten Nebengruppe, beispielsweise eines Alkali- oder Erdalkalisalzes eines Permanganats, Wolframats oder Molybdats, eines Ammoniummolybdats oder eines Polyoxalats des Vanadiums, Niobs oder Tantals sind nach der Lehre der Erfindung wesentliche Bestandteile der Beschichtungszusammensetzung. Im Folgenden wird diese erfindungswesentliche Komponente zusammenfassend kurz als "Salze" bezeichnet. Unter den Salzen der Säuren der Übergangsmetalle sind sowohl Salze von Lewis-Säuren, z. B. Kaliumpermanganat, oder Salze von Brönstedt-Säuren, z. B. Vanadiumpolyoxalate geeignet. Die Salze können einzeln oder in Mischung eingesetzt werden. Die Salze können auch als Polyoxometallate bezeichnet werden, z. B. nach der Nomenklatur gemäß "Heteropoly and Isopoly Oxometalates", M.T. Pope, Springer Verlag Berlin, 1983.

Insbesondere Kaliumpermanganat, Ammoniummolybdat oder Kaliumwolframat verzögern unerwünschte Reaktionen in der Beschichtungszusammensetzung, die die Brauchbarkeit der Beschichtungszusammensetzung beeinträchtigen könnten. Kaliumpermanganat und die anderen genannten Salze wirken als Stabilisator und verlängern die Nutzungsdauer der Beschichtungszusammensetzung erheblich. Der Wirkmechanismus ist nicht näher bekannt.

Aus der GB 949,734 ist das Vorbehandeln von Zinkoberflächen mit Permanganaten bekannt. Die Vorbehandlung wird dort durchgeführt, um nachfolgend aufgetragene Konversionsschichten besser auf der Metalloberfläche zu verankern. Dieser Aspekt ist für die vorliegende Erfindung nicht von Bedeutung, da keine weiteren Schichten auf die Metallpartikel aufgebracht werden sollen. Für die vorliegende Erfindung kann dagegen nicht ausgeschlossen werden, dass der Zusatz der Salze auf einer Reaktion mit den Metallpartikeln beruht. Es wird möglicherweise durch diese Reaktion in Gegenwart von Bindemittel eine vorteilhafte Wirkung erzielt, die darin besteht, dass unerwünschte Reaktionen zwischen Komponenten der Beschichtungszusammensetzung unterbunden werden, die bisher durch die unbehandelten Metallpartikel induziert wurden. Es findet also unter Umständen eine Reaktion statt, die man als Phlegmatisierung der Metallpartikel bezeichnen kann. Die Badstabilität, also der Zeitraum, innerhalb dessen Werkstücke aus Metall mit der Beschichtungszusammensetzung beschichtet werden können, wird durch den Zusatz des erfindungsgemäß eingesetzten Salzes signifikant verlängert, ohne dass die antikorrosiven Eigenschaften der Metallpartikel, dass heißt, der kathodische Korrosionsschutz, durch den Zusatz eines Salzes leiden.

Die Oxide der Elemente Vanadium, Niob, Tantal, Chrom, Molybdän, Wolfram, Mangan und Rhenium sind ebenfalls geeignet, die Badstabilität einer Beschichtungszusammensetzung signifikant zu verlängern, ohne dass die Korrosionsschutzwirkung der auf dem Werkstück aufgetragenen Beschichtung darunter leidet. Mit Erfolg können zum Beispiel Vanadium-(V)-oxid V₂O₅, Niob-(V)-oxid N₂O₅ und Tantal-(V)-oxid Ta₂O₅ eingesetzt werden, aber genauso sind Chrom-(III)-oxid Cr₂O₃, oder Chrom-(VI)-oxid CrO₃ sowie Molybdän-(VI)-oxid MoO₃, Wolfram-(VI)-oxid WO₃, Mangan-(II)-oxihydrat MnO₂ x H₂O, Mangan-(IV)-oxid MnO₂ und Mangan-(VII)-oxid Mn₂O₇, und auch Rhenium-(VII)-oxid Re₂O₇ geeignet, die Badstabilität zu verbessern ohne den Korrosionsschutz der auf das Werkstück aufgebrachten Beschichtung zu beeinträchtigen.

Es ist als Vorteil der Erfindung anzusehen, dass die Phlegmatisierung der Metallpartikel keine separate Vorbehandlung erfordert. Vielmehr kann der erfindungsgemäße Zusatz einer Sauerstoffverbindung der Nebengruppenelemente, bevorzugt eines Salzes der Säure eines Übergangsmetalls oder eines Oxids eines Übergangsmetalls oder einer Mischung dieser Verbindungen zu der an sich bekannten Beschichtungszusammensetzung aus Metallpartikel und Bindemittel erfolgen. Auch eine nachfolgende Trennung der Komponente III von der bekannten Beschichtungszusammensetzung ist nicht erforderlich, da sie sich in der auf dem Werkstück aufgetragenen und ausgehärteten Beschichtung, die aus der Beschichtungszusammensetzung entsteht, nicht nachteilig auswirkt.

Die erfindungsgemäß als Stabilisator eingesetzte Sauerstoffverbindung der Nebengruppenelemente, also des Salzes der Säure eines Übergangsmetalls oder des Oxids eines Übergangsmetalls oder einer Mischung der vorgenannten Verbindungen wird in Mengen von 0,001 Gewichts-% bezogen auf den Festkörper der Beschichtungszusammensetzung bis 10,0 Gewichts-% bezogen auf den Festkörper der Beschichtungszusammensetzung eingesetzt. Die Untergrenze ergibt sich daraus, dass geringere Mengen der Komponente III keine akzeptable Verlängerung der Nutzungsdauer bewirken. Die Obergrenze ergibt sich aus Kostengründen, aber auch daraus, dass z. B. die Löslichkeitsgrenze des Salzes erreicht ist oder, wie z. B. bei Kaliumpermanganat beobachtet, ein übermäßiger Einsatz zu einer unerwünschten Wärmeentwicklung beim Herstellen der Beschichtungszusammensetzung verursacht. Bevorzugt wird die Sauerstoffverbindung der Nebengruppenelemente in einer Menge von 0,05 Gewichts-% bis 5 Gewichts-% eingesetzt.

Die Beschichtungszusammensetzung weist in der Regel weitere Komponenten auf. Es handelt sich hier z. B. um Additive, die die Badeigenschaften, die Qualität der Beschichtung und andere Parameter im Zusammenhang mit der Verarbeitung der Beschichtungszusammensetzung fördern (Verlauf der Beschichtung, Trocknung, Filmbildung etc.). Fast immer wird als Komponente IV ein Entschäumer oder eine Mischung von Entschäumern zugesetzt. Typische Entschäumer sind Mineralölentschäumer oder Silikonentschäumer wie z. B. Polyethersiloxane. Der Zusatz von Entschäumern gewährleistet eine reibungslose Verarbeitung der erfindungsgemäßen Beschichtungszusammensetzung.

Üblich ist auch der Zusatz einer Komponente V, also eines Netzmittels oder einer Mischung von Netzmitteln. Netzmittel werden zur besseren Bindung der Beschichtung an die Oberfläche des zu beschichtenden Werkstücks eingesetzt. Die Komponente V kann aber auch Netz- und Dispergieradditive umfassen, die zusätzlich die Homogenität der Beschichtungszusammensetzung gewährleisten, indem sie ein Absetzen oder Entmischen einzelner Bestandteile oder Komponenten verhindern. Bekannte Netzmittel bzw. Netz- und Dispergiermittel werden kategorisiert als kationische, anionische und nicht-ionische Netzmittel. Häufig verwendete Netz- und Dispergiermittel sind z. B. ethoxylierte Alkohole wie z. B. Alkyl-Phenol-Ethoxylate aber auch ethoxylierte Fettsäuren. Typische Netzmittel sind Alkylethersulfonate, Alkylsulfosuccinate und Dialkylsulfosuccinate wie z. B. Natriumdioctylsulfosuccinat.

Auf die Qualität der Beschichtung wirkt sich auch der Einsatz von Verdickern oder von einer Mischung von Verdickern positiv aus, die ggf. der Beschichtungszusammensetzung als Komponente VI zugesetzt sind. Typische Verdicker sind Cellulosederivate wie Hydroxyethylcellulase, Methylcellulose, Methylethylcellulose, Methylhydroxypropylcellulose, Ethylhydroxyethylcellulose oder Zuckerderivate wie z. B. Xanthan als natürlicher Vertreter der Verdickungsmittel. Aber auch Schichtsilikate oder pyrogene Kieselsäure sowie Polyurethanverbindungen zählen zu den bekannten Verdickern.

Je nach Anwendung werden der erfindungsgemäßen Beschichtungszusammensetzung fakultativ Korrosionsschutz-Additive zugegeben, also Substanzen die den Korrosionsschutzweiter verbessern. Typische Korrosionsschutz-Additive sind z. B. Phosphorverbindungen wie Phosphonsäuren oder deren Salze und Phosphate, sowie auch Citrate, Ascorbate oder Molybdate. Auch andere Stabilisatoren wie z. B. aliphatische Nitrate oder auch mono- oder oligo-Nitrate der Benzoe- oder Salicylsäure, die den Korrosionsschutz verbessern, können der Beschichtungszusammensetzung zugesetzt werden.

Aber auch weitere Zusätze, z. B. Pigmente oder Farbstoffe zum Erzeugen farbiger Beschichtungen, Schmiermittel, Anti-Absetzmittel oder pH-Regulatoren können in der Beschichtungszusammensetzung enthalten sein. Bei den vorgenannten Pigmenten kann es sich auch um Metallpartikel handeln. Metallpartikel, die im Zusammenhang mit dieser Erfindung als Pigmente bezeichnet werden, weisen jedoch keine antikorrosive Wirkung auf; sie wirken lediglich färbend.

Die erfindungsgemäße Beschichtungszusammensetzung ist zum Aufbringen auf die Oberfläche von Werkstücken, insbesondere metallischen Werkstücken, geeignet. Sie wirkt antikorrosiv, insbesondere durch die Metallpartikel, die kathodisch wirksamen Rostschutz aufbauen. Es ist als besonderer Vorteil der Erfindung anzusehen, dass die erfindungsgemäß zugesetzten Verbindungen der Übergangsmetalle diesen Korrosionsschutz nicht beeinträchtigen.

Die Beschichtungszusammensetzung nach Anspruch 1 kann z. B. durch Spritzen, Sprühen, Tauchen, Gießen oder durch ein Tauch-Schleuderverfahren aufgetragen werden. Sie wird häufig zum Herstellen eines Tauchbades verwendet, kann aber auch ohne weiteres z. B. in Coil-Coating-Verfahren eingesetzt werden, in denen die Beschichtungszusammensetzung durch Spritzen oder Gießen aufgebracht wird.

Die Erfindung umfasst weiter die Verwendung einer Sauerstoffverbindung der Nebengruppenelemente oder einer Mischung von Sauerstoffverbindungen der Nebengruppenelemente in Form eines Salzes der Säure eines Übergangsmetalls oder eines Oxids eines Übergangsmetalls oder einer Mischung eines Salzes einer Säure eines Übergangsmetalls und eines Oxids eines Übergangsmetalls, wobei das Übergangsmetall ausgewählt ist aus Vanadium, Niob, Tantal, Chrom, Molybdän, Wolfram, Mangan und Rhenium, in einem antikorrosiven Beschichtungsmittel.

Typisch handelt es sich um ein antikorrosives Beschichtungsmittel, das Metallpartikel und Bindemittel sowie ggf. weitere Zusätze oder Additive aufweist, wie sie im Zusammenhang mit dieser Anmeldung beschrieben sind. Die Verwendung dieser Sauerstoffverbindung oder einer Mischung unterschiedlicher solcher Sauerstoffverbindungen der Nebengruppenelemente bewirkt eine verbesserte Badstabilität bei gleichzeitig wenig beeinträchtigter Korrosionsschutzwirkung der Beschichtung auf dem Werkstück.

Gegenstand der Erfindung ist auch ein Verfahren nach Anspruch 11 zum Herstellen einer Beschichtungszusammensetzung nach mindestens einem der Ansprüche 1 - 9.

Die vorliegende Erfindung betrifft somit ein Verfahren zum Herstellen einer antikorrosiven Beschichtungszusammensetzung, wie sie zuvor beschrieben wurde, mit den Schritten
- Mischen von Metallpartikeln und Bindemittel in Gegenwart von Flüssigkeit und
- Hinzufügen einer Sauerstoffverbindungen der Nebengruppenelemente oder einer Mischung von Sauerstoffverbindungen der Nebengruppenelemente in From eines Salzes der Säure eines Übergangsmetalls oder eines Oxids eines Übergangsmetalls oder einer Mischung eines Salzes einer Säure eines Übergangsmetalls und eines Oxids eines Übergangsmetalls, wobei das Übergangsmetall ausgewählt ist aus Vanadium, Niob, Tantal, Chrom, Molybdän, Wolfram, Mangan und Rhenium.

Erfindungsgemäß wird die Komponente III, also die genannten Verbindungen der Übergangsmetalle einzeln oder in Mischung, der Komponente I (Metallpartikel) in Gegenwart der Komponente II (Bindemittel) zugesetzt. Die Komponente III kann zugesetzt werden, während oder nach dem die Komponenten I und II gemischt werden. Bevorzugt kann die Komponente III vor dem Hinzufügen oder in Gegenwart von Flüssigkeit zugesetzt werden, vorteilhaft in Gegenwart von 2 Gewichts-% Flüssigkeit bis 90 Gewichts-% Flüssigkeit. Nach einer weiter bevorzugten Ausführungsform kann die Komponente III in Gegenwart von weiteren in dieser Anmeldung genannten Additiven der Beschichtungszusammensetzung zugesetzt werden.

Gebrauchsfertige Mischungen der vorgenannten Komponenten der Beschichtungszusammensetzung werden im Zusammenhang mit dieser Erfindung als Ansatz bezeichnet. Ein Ansatz weist in Kombination in der Regel ohne stetige Durchmischung keine lange Lagerfähigkeit auf oder er erfordert ein zu hohes Transportvolumen, da er in konzentrierter Form nicht herstellbar ist. Ein Ansatz aus einer erfindungsgemäßen Beschichtungszusammensetzung wird daher bevorzugt wie folgt am Verbrauchsort zur Beschichtung von Werkstücken bereitgestellt: Die einzelnen Komponenten (Metallpartikel, Bindemittel, die erfindungsgemäß eingesetzte Sauerstoffverbindung der Übergangsmetalle, und Additive) werden zunächst separat hergestellt. Soweit möglich werden mehrere einzelne Komponenten der Beschichtungszusammensetzung zu Transportkomponenten zusammengefasst und vom Herstellort zum Verbrauchsort transportiert. Soweit möglich, werden die Transportkomponenten in konzentrierter Form bereitgestellt, um Transportvolumina -und damit - kosten- zu minimieren. Dies gewährleistet zudem eine einfache und sichere Herstellung und einen unkomplizierten Transport der Beschichtungszusammensetzung. Am Verbrauchsort erfolgt die Mischung der einzelnen Komponenten sowie ggf. der Zusatz von Flüssigkeit zu einem Ansatz, also einer gebrauchsfertigen Beschichtungszusammensetzung.

Bevorzugt werden Metallpartikel und Bindemittel zu einer Transportkomponente A zusammengefasst. Die Transportkomponente A kann bei Bedarf weitere Additive enthalten, z. B. Mittel zum Stabilisieren der Metallpartikel. Außerdem wird die Transportkomponente A bevorzugt Flüssigkeit enthalten, da die Metallpartikel in der Regel als Paste, also mit einem Anteil Flüssigkeit bereitgestellt werden. Auch das Bindemittel wird in der Regel nicht in Reinform sondern in Flüssigkeit gelöst, dispergiert oder suspendiert bereitgestellt. Die Transportkomponente A enthält also die wesentlichen Komponenten der Beschichtungszusammensetzung, die auf dem zu beschichtenden Werkstück appliziert werden.

Falls gewünscht können weitere Additive der Transportkomponente A zugesetzt oder in weiteren Transportkomponenten zusammengefasst werden. Typisch werden z. B. Additive, die die Gebrauchseigenschaften der Beschichtungszusammensetzung wesentlich beeinflussen, in einer Transportkomponente B zusammengefasst. Die Transportkomponente B kann also einzelne oder alle der nachfolgend aufgezählten Komponenten aufweisen: Additive zur Einstellung des pH-Werts, Entschäumer, Netzmittel, die die Benetzung der Werkstückoberfläche durch das Bindemittel verbessern, Farbstoffe, Pigmente, die zu einem verbesserten Korrosionsschutz beitragen oder Katalysatoren für das Bindemittel, Co-Bindemittel, die mit dem Bindemittel ein gemeinsames Netzwerk bilden.

Da sich einzelne Additive untereinander unter Umständen nicht mischen, transportieren oder lagern lassen, kann es sich als erforderlich erweisen, eine Transportkomponente C zusammenzustellen, z. B. für ein Verdickungsmittel, das einen nachteiligen Einfluss auf die Lagerung und den Transport der Transportkomponenten A und /oder B ausübt.

Auch das erfindungsgemäß eingesetzte Salz als Stabilisator der Beschichtungszusammensetzung kann -je nach Substanz- mit anderen Additiven in einer Transportkomponente zusammengefasst werden. Einzelne Stabilisatoren wie insbesondere Kaliumpermanganat sind aber nicht für das Einbinden in Transportkomponenten geeignet, z. B. weil sie unverzüglich mit den anderen Bestandteilen der Beschichtungszusammensetzung reagieren. Sie werden als eigene Transportkomponente D bereitgestellt.

Gegenstand der Erfindung ist schließlich ein Werkstück nach Anspruch 13. Das Werkstück ist erfindungsgemäß mit einer antikorrosiven Beschichtung mit Metallpartikeln beschichtet, welche mit der Beschichtungszusammensetzung wie sie zuvor beschrieben wurde erhältlich ist, wobei die Beschichtung eine Sauerstoffverbindung oder eine Mischung von Sauerstoffverbindungen der Nebengruppenelemente in Form eines Salzes der Säure eines Übergangsmetalls
oder eines Oxids eines Übergangsmetalls oder einer Mischung eines Salzes einer Säure eines Übergangsmetalls und eines Oxids eines Übergangsmetalls aufweist, wobei das Übergangsmetall ausgewählt ist aus Vanadium, Niob, Tantal, Chrom, Molybdän, Wolfram, Mangan und Rhenium, oder wobei die Beschichtung Reaktionsprodukte dieser Sauerstoffverbindungen mit den Metallpartikeln aufweist.

In der auf dem Werkstück abgebundenen oder ausgehärteten antikorrosiven Beschichtung finden sich neben den Metallpartikeln und ggf. noch Resten des Salzes oder Oxids eines Nebengruppenelements auch deren Reaktionsprodukte, die sich z. B. aus Reaktionen zwischen den Metallpartikeln und einer erfingdungsgemäß eingebrachten Sauerstoffverbindung oder der Flüssigkeit, die ursprünglich mit der Beschichtung aufgebracht wurde und einer Sauerstoffverbindung bzw. zwischen dem Bindemittel und einer Sauerstoffverbindung ergeben. Beispielsweise findet sich neben Zinkpartikeln und Kaliumpermanganat in der ausgehärteten bzw. abgebundenen Beschichtung auch Braunstein.

Details der Erfindung werden nachfolgend an Hand von Ausführungsbeispielen näher erläutert.

### Ausführungsbeispiele betreffend die Verwendung der Salze von Übergangsmetallen

Die erfindungsgemäße Beschichtungszusammensetzung weist mindestens Metallpartikel, Bindemittel und eine Sauerstoffverbindung eines Salzes einer Säure oder eines Oxids von Vanadium, Niob, Tantal, Chrom, Molybdän, Wolfram, Mangan oder Rhenium auf. Die Beschichtungszusammensetzung gemäß den nachfolgend im Detail erläuterten Ausführungsbeispielen kann auch noch weiterhin Additive aufweisen. Die Komponenten werden einzeln hergestellt, nach vorgegebenen Gewichtsanteilen abgefüllt und, sofern die Komponenten untereinander keine für die Nutzungseigenschaften des Ansatzes nachteiligen Reaktionen eingehen, in Transportkomponenten zusammengefasst. Das Zusammenfassen in Transportkomponenten nach vorgegebenen Gewichtsanteilen vereinfacht das abschließende Herstellen des Tauchbades und vermeidet damit Fehler beim Abmessen und Zusammenfügen der einzelnen Komponenten.

Soweit im Folgenden Mengen nicht anders angegeben sind, sind die Angaben Gewichts-% bezogen auf die Beschichtungszusammensetzung, also auf die Gesamtheit aller Komponenten einschließlich der Flüssigkeit, aus denen ein Ansatz zum Beschichten von metallischen Werkstücken hergestellt wird.

### Ausführungsbeispiel 1

Für eine erfindungsgemäße antikorrosive Beschichtungszusammensetzung werden zunächst die Komponente I, die Metallpartikel und die Komponente II, das Bindemittel hergestellt:

### Komponente I

Metallpartikel, hier Zinkpartikel, werden als Paste mit 10 Gewichts-% Testbenzin angerieben. Auch Aluminiumpartikel, angerieben mit einem hochsiedenden Alkohol (Siedepunkt über 100°C) wie z. B. Dipropylenglykol, Magnesiumpartikel, Zinnpartikel, Mischungen oder Legierungen der vorgenannten Metalle können als Metallpartikel eingesetzt werden.

### Komponente II

Ein Epoxysilan-Oligomer, hier ein bifunktionelles Organosilan, Glycidyloxypropyltriethoxysiloxan, wird mit einem Feststoffgehalt von 100 Gewichts-% wasserfreibereitgestellt.

Auch die weiteren, im Folgenden näher beschriebenen Einzelkomponenten werden separat hergestellt. Aus den einzelnen Komponenten oder Bestandteilen der Beschichtungszusammensetzung werden dann Transportkomponenten hergestellt. Es ist vorteilhaft, wenn die Transportkomponenten in ihren Gewichtseinheiten so aufeinander abgestimmt sind, dass je ein Gebinde einer Transportkomponente eingesetzt wird, um einen Ansatz für eine gebrauchsfertige oder anwendungsfertige Beschichtungszusammensetzung herzustellen.

### Transportkomponente A

Komponente I und II werden zur Transportkomponente A miteinander verrührt. Dabei werden -jeweils bezogen auf das Gesamtgewicht der Transportkomponente A- 75 Gewichts-% Metallpartikel und 10 Gewichts-% des Bindemittels zugesetzt. Ethoxylierter Alkohol wird in einer Menge von 6 Gewichts-% als Netz- und Dispergieradditiv zugesetzt. Das Dispergieradditiv beschleunigt und vergleichmässigt das Mischen der beiden Komponenten I und II. Weiter werden 9 Gewichts-% eines höhersiedenden Alkohols, hier Dipropylenglykol, als Flüssigkeit zudosiert.

### Transportkomponente B

In wässriger Lösung werden ein Netzmittel (Natriumdioctylsulfosuccinat), ein Entschäumer (Polyethersiloxan) und ein Korrosionsschutzpigment (Molybdat) sowie Mittel zum Einstellen des pH-Werts (Phosphorsäure) zusammengefasst. Bezogen auf das Gesamtewicht der Transportkomponente B beträgt der Anteil des Netzmittels und des Entschäumers jeweils 1 Gewichts-%, das Korrosionsschutzpigment wird mit 2 Gewichts-% eingesetzt und es werden 1,5 Gewichts-% Phosphorsäure eingesetzt. Im Übrigen besteht die Transportkomponente B aus Wasser.

Transportkomponente A und Transportkomponente B tragen jeweils mit 65 Gewichts-% und 35 Gewichts-% zur Beschichtungszusammensetzung bei.

### Transportkomponenten C und D

Bezogen auf den Feststoffgehalt der Transportkomponenten A und B werden nach Mischen der beiden Transportkomponenten A und B 4 Gewichts-% eines Verdickers (Transportkomponente C) und 2 Gewichts-% Kaliumpermanganat (Transportkomponente D) zugesetzt. Diese Beschichtungszusammensetzung kann z. B. für Spritz-, Tauch-, Gieß- oder Tauch-Schleuderbeschichtungsverfahren eingesetzt werden. Je ein Gebinde der Transportkomponenten A, B, C und D werden wie nachfolgend zum Ausführungsbeispiel 2 beschrieben miteinander verrührt. Die antikorrosive Beschichtungszusammensetzung ist jetzt gebrauchsfertig und das Beschichten kann beginnen.

Hier wird ein Tauchbad hergestellt, dessen Stabilität, das heißt, seine Eignung für die bestimmungsgemäße Beschichtung von Werkstücken mit antikorrosiver Beschichtungszusammensetzung, erfasst wird. Die Eignung wird durch Prüfung der Beschichtung bestimmt, die auf der Oberfläche des Werkstücks appliziert wird.

Die Stabilität, dass heißt, die Nutzungsdauer des Bades, während derer qualitativ gleichbleibende Beschichtungen auf Werkstücken erzeugt werden können, bleibt für mehr als 2 Wochen erhalten.

### Ausführungsbeispiel 2

Hier werden acht Versuche erläutert, die mit verschiedenen Salzen der Säuren von Übergangsmetallen durchgeführt wurden, um die Verbesserung der Stabilität von Beschichtungszusammensetzungen zu zeigen. Soweit nichts anderes erwähnt ist, entspricht die Zusammensetzung und Herstellung der Beschichtungszusammensetzung des Ausführungsbeispiels 1.

Es werden -wie in Tab. 1 dargestellt- die Komponente I (die Metallpartikel), hier Pasten aus Zinkflake und Zink-Aluminiumlegierungsflake, und die Komponente II (das Bindemittel), hier ein Epoxy-Silan-Oligomer, in Gegenwart von organischen Lösungsmitteln (Dipropylenglykol und 1-Nitropropan) zu einer Transportkomponente A gemischt. Metallpartikel und Bindemittel reagieren auch bei längerer Lagerdauer nicht nachteilig miteinander und können in Verbindung mit den weiteren, nachfolgend beschriebenen Komponenten oder Bestandteilen zu einem beständigen Tauchbad oder einem beständigen Ansatz z. B. für das Besprühen von Werkstücken vermischt werden.

Weitere Komponenten wie Entschäumer und Mittel zum Einstellen des pH-Werts sowie ein Netzadditiv werden gemäß der Angaben in Tabelle 1 zu einer Transportkomponente B zusammengefasst. Die Gewichtsanteile der verschiedenen einzelnen Komponenten aber auch der Transportkomponenten sind so ausgelegt, dass sie bei Verwendung auf einander abgestimmter Gebindegrößen und der vorgeschriebenen Menge an Flüssigkeit einen zum Beschichten von metallischen Werkstücken geeigneten, beständigen Ansatz ergeben.

Die Transportkomponente B mit den Gewichtsanteilen der verschiedenen Additive oder Bestandteile ist in Tab. 1 dargestellt. Sie weist auf: ortho-Phosphorsäure, je nach Versuch hoch konzentriert (85%-ig) und/oder stark verdünnt (0,1 %-ig), Natronwasserglas (25 %-ige Lösung) zum Einstellen des pH-Werts, Natriumdioctylsulfosuccinat als Netzadditiv und Polyethersiloxan-Copolymer als Entschäumer.

Die Transportkomponente C besteht nach diesem Ausführungsbeispiel aus einem in Wasser gelösten bzw. dispergierten Verdicker, hier Xanthan Gum. Xanthan Gum wird als 1,5-%ige Lösung eingesetzt. Der Verdicker wirkt wesentlich auf die Viskosität und das Verhalten der Komponenten beim Zusetzen von Flüssigkeit zur Herstellung des Ansatzes ein und wird deshalb bevorzugt als separate Transportkomponente C hergestellt und geliefert und als letzter Bestandteil des Ansatzes eingemischt.

Alternativ können die Komponenten auch in anderer Weise in den Transportkomponenten zusammengefasst sein. Es ist z. B. auch möglich, Additive wie beispielsweise Konservierungsmittel, Verdickungsmittel, Entschäumer und Netzmittel mit Flüssigkeit, bevorzugt mit Wasser als Transportkomponente C bereitzustellen. Komponente B würde in diesem Fall die zum Einstellen des pH-Werts erforderlichen Chemikalien in Flüssigkeit, bevorzugt in wässriger Lösung bereitstellen.

Als Vorteil der Erfindung ist anzumerken, dass die Transportkomponenten A, B und C lagerstabil und auch für lange Transporte, z. B. von der Produktionsstätte oder den Produktionsstätten der einzelnen Komponenten zum Verwendungsort geeignet sind. Eine Lagerdauer oder Transportfähigkeit von 16 Wochen wird ohne weiteres erreicht. Mit anderen Worten kann die Herstellung der erfindungsgemäßen Beschichtungszusammensetzung zentral erfolgen und über weite Strecken an Kunden geliefert werden, die Tauchbäder oder andere Beschichtungsanlagen zum Erzeugen von Korrosionsschutzschichten mit Metallpartikeln auf metallischen Werkstücken, sogenannte Basecoats, nutzen.

Die Komponente III (Transportkomponente D) wird -anders als bisher einsetzbare Borverbindungen- nicht einer der Transportkomponenten A, B oder C zugesetzt. Es kann sein, dass die stabilisierende Wirkung der o.g. Salze der Säuren von Übergangsmetallen sich bereits während des Lagerns und Transportierens der Transportkomponente A entfaltet und beim Herstellen des gebrauchsfertigen Ansatzes bereits verbraucht wäre. Die Transportkomponente D wird vorzugsweise nicht mit anderen Komponenten des Ansatzes vorab vermischt, gelagert oder transportiert. Sie wird unmittelbar bei Herstellen, das heißt unmittelbar vor der Verwendung des Ansatzes zugesetzt.

Metallpartikel und Bindemittel sind die wesentlichen, filmbildenden Bestandteile einer antikorrosiven Beschichtung für metallische Werkstücke. Die Beschichtung wird z. B. durch Sprühen oder Tauchen in ein Tauchbad appliziert, beispielsweise in einem Tauch-Schleuder-Verfahren, bei dem überschüssiges Beschichtungsmittel durch Zentrifugieren der getauchten Werkstücke entfernt wird. Das Beschichtungsmittel kann lufttrocknend sein, es kann aber auch ein Trockenvorgang erforderlich sein, um das Beschichtungsmittel zu einem trockenen, auf der Oberfläche des Werkstücks abgebundenen und fest haftenden Trockenfilm auszuhärten.

Im Folgenden beschreiben wir die Herstellung der Transportkomponenten und des aus den Transportkomponenten zu mischenden Ansatzes der Beschichtungszusammensetzung, der zur Durchführung der Versuche mittels Rakel aufgetragen wurde. Die Herstellung der Transportkomponente A erfolgt in der Weise, dass die Metallpartikel in Form von Paste in das vorgelegte Bindemittel eingerührt werden, z. B. durch einen Dissolver. Um eine gleichmäßige Verteilung zu erreichen, wird meist 30 Minuten bis 90 Minuten gerührt; das Rühren erfolgt so lange bis Homogenität erreicht ist. Die Transportkomponente B besteht aus einfach zu mischenden Komponenten, so dass die einzelnen Substanzen mit einem Flügelrührer unter Rühren in das vorgelegte Wasser eingemischt werden. Es ist nur eine kurze Rührzeit erforderlich, 5 Minuten sind ausreichend. In gleicher Weise wie die Transportkomponente B wird die Transportkomponente C (Verdicker) zu einer wässrigen Lösung gerührt.

Die Lösungen werden in Behälter abgefüllt, deren Größe so abgestimmt ist, dass ein Behälter jeder Transportkomponente zur Herstellung eines Ansatzes mit Wasser vermischt wird. Der Ansatz wird vorzugsweise durch Mischen der Transportkomponenten in der Reihenfolge der Transportkomponenten, hier A, B, C hergestellt. Sollte zur Einstellung der Viskosität noch weitere Flüssigkeit erforderlich sein, wird Wasser zugegeben. Das Einrühren oder Mischen erfolgt mit üblichem Werkzeug, z. B. einem Flügelrührer. Aufgrund der in der Transportkomponente A enthaltenen Metallpaste kann es sich empfehlen, diese oder den Ansatz insgesamt für eine längere Zeit unter Rühren zu homogenisieren. Die Reihenfolge des Mischens der Transportkomponenten ist weitgehend beliebig, es empfiehlt sich lediglich, den Verdicker erst als letzte Komponente zuzusetzen, um das Mischen der übrigen Komponenten mit der Flüssigkeit nicht zu erschweren. Die Komponente III, also z. B. Kaliumpermanganat oder Kaliumwolframat bedürfen keiner weiteren Vorbereitung, sie können dem Ansatz unmittelbar unter Rühren zugesetzt werden. Es empfiehlt sich jedoch, die Temperatur des Ansatzes beim Einrühren des Salzes zu kontrollieren und ggf. das Einrühren zu verlangsamen, wenn die Temperatur über40 °C ansteigt. Sollte ein erfindungsgemäßes Salz beim Einrühren zu einer Temperaturerhöhung des Ansatzes führen, ist es empfehlenswert, ca. 10 Stunden zu rühren, um einen gleichmäßigen, temperaturstabilen Ansatz zu erhalten.

Beschichtet werden Stahlbleche. Die Beschichtungszusammensetzung wird mit einem Rakel auf die Stahlbleche aufgetragen. Die Beschichtungszusammensetzung wird 30 Minuten bei 300 °C getrocknet. Die getrocknete, ausgehärtete Beschichtung weist eine Stärke (Trockenfilmstärke) von 10 µm auf. Die Qualität der Beschichtung wird gemäß DIN EN ISO 9227 im neutralen Salzsprühnebeltest bis Rotrost getestet.

Die Transportkomponenten A, B und C sind, wie der Tabelle 1 zu entnehmen ist, für die nachfolgend geschilderten Versuche gleich. Variiert wird die Zugabe der Transportkomponente D, des Salzes der Säure eines Übergangsmetalls und ggf. der Zusatz von Säure in Verbindung mit dem Salz. Ziel ist es, die Stabilität des Tauchbades zum Beschichten von metallischen Werkstücken mit einer Antikorrosionsschicht zu verbessern, also die Nutzungsdauer der Beschichtungszusammensetzung zu verlängern, ohne Borverbindungen einzusetzen.

Versuch I ist ein Referenzversuch ohne jegliche stabilisierende Komponente. Es wird kein Salz einer Säure eines Übergangsmetalls zugesetzt. Versuche mit Borsäure als Referenz sind vorliegend nicht hilfreich, da Borverbindungen auf Grund von Gesundheitsbestimmungen nicht mehr eingesetzt werden dürfen. Zur Auswertung der Versuche wird angegeben, wieviel Tage das Tauchbad zum qualitativ akzeptablen Beschichten von Werkstücken genutzt werden konnte. Versuch I zeigt für die Badstabilität, also für die mögliche Nutzungsdauer eines Tauchbades, 0 Tage. Dieses Bad ist nicht wirtschaftlich nutzbar.

Versuch II zeigt den Zusatz von 0,06 %Ammoniummolybdat in Verbindung mit 0,31 % Phosphorsäure 85 %-ig in der Transportkomponente B. Das Tauchbad gemäß Versuch II konnte für zwei Tage zum qualitativ akzeptablen Beschichten von Werkstücken eingesetzt werden. Dieser Zeitraum ist ausreichend, wenn ein Ansatz z. B. zum Beschichten von Stahlbändern (Coil Coating) eingesetzt wird. Hervorzuheben ist hier, dass bereits minimale Mengen des Salzes ausreichen, um die gewünschte Stabilisierung des Ansatzes zu erreichen.

Versuche III bis V zeigen die Wirkung von Kaliumpermanganat in unterschiedlichen Mengen und untersuchen die Wirkung des Säurezusatzes am Beispiel hochkonzentrierter Phosphorsäure. Folgende Mengen Kaliumpermanganat werden zugesetzt: Versuch III: 0,51%, Versuch IV: 1,02 % und Versuch V: 1,02 %, jeweils bezogen auf den Gesamtlack. Den Versuchen III und IV wurden 0,31 % Phosphorsäure 85 %-ig zugesetzt; Versuch V wurde ohne hoch konzentrierte Phosphorsäure durchgeführt. Die Mittel zum Einstellen des pH-Wertes sehen für Versuch V ausschließlich Wasserglas und Phosphorsäure in einer Konzentration von 0,1 % vor.

Das Tauchbad nach Versuch III konnte 6 Tage für qualitativ akzeptable Beschichtungen genutzt werden, der Ansatz nach Versuch IV war 20 Tage nutzbar und der Ansatz gemäß Versuch V konnte 12 Tage zum Erzeugen qualitativ akzeptabler Korrosionsschutzbeschichtungen eingesetzt werden. Damit eigenen sich die Beschichtungszusammensetzungen der Versuche IV und V besonders für das Herstellen von Tauchbädern.

Kaliumpermanganat ist eine preiswerte, gut verfügbare Komponente, die sich im Übrigen bei der Nutzung des erfindungsgemäßen Ansatzes nicht nachteilig bemerkbar macht. Allenfalls eine gewisse Erwärmung beim Herstellen des erfindungsgemäßen Ansatzes ist zu beobachten, die jedoch 40 °C in der Regel nicht übersteigt und die die übrigen Komponenten der Beschichtungszusammensetzung nicht nachteilig beeinflusst. Hervorzuheben ist hier die ausgezeichnete antikorrosive Wirkung der Beschichtung auf dem Werkstück, die mehr als 2.000 Stunden Beständigkeit im Salzsprühtest erreicht.

**Tabelle 1 Beschichtungszusammensetzung ohne ein Salz einer Säure eines Übergangsmetalls (Zusammensetzung in % bezogen auf den Gesamtlack)**

| **Transportkomponenten** | **Bestandteil** | **Anteil (%)** |
|---|---|---|
| **Transportkomponente A** | Dipropylenglykol | 5,30 |
| | Epoxy-Silan-Oligomer | 10,00 |
| | Isotridecanol, ethoxyliert | 4,00 |
| | 1-Nitropropan | 0,75 |
| | Zinkflake (in DPG) und Zink-Aluminiumflake(in Testbenzin) | 45,10 |
| **Transportkomponente B** | demi-Wasser | 29,64 |
| | (NH₄)₆Mo₇O₂₄ . 4H₂o | 0,06 |
| | ortho-Phosphorsäure | 0,50 |
| | Natronwasserglas | 0,10 |
| | Natriumdioctylsulfosuccinat (Netzadditiv) | 0,50 |
| | Polyethersiloxan-Copolymer (Entschäumer) | 0,50 |
| **Transportkomponente C** | Xanthan Gum (Verdicker) | 3,55 |

Die Versuche VI bis VIII wurden mit Kaliumwolframat unter ansonsten gleichen Bedingungen wie die Versuche mit Kaliumpermanganat durchgeführt, dass heißt, bei Versuch VI wurden 0,50 % und bei Versuch VII und Versuch VII wurden jeweils 1,02 % Kaliumwolframat bei gleichzeitigem Zusatz von 0,31 % Phosphorsäure 85 %-ig angesetzt. Versuch VIII wurde mit 1,02 % K₂WO₄, jedoch ohne Phosphorsäure 85 %-ig durchgeführt. Der Ansatz war bei Versuch VI für 10 Tage nutzbar, bei Versuch VII für 13 Tage und bei Versuch III für 4 Tage. Damit kann auch für Kaliumwolframat jeweils eine Beschichtungszusammensetzung gewählt werden, die für rasch verbrauchte Ansätze, wie sie z. B. beim Coil-Coating gefordert sind, optimal eingestellt sind. Alternativ können Zusammensetzungen hergestellt werden, die besonders für Tauchbäder geeignet sind, bei denen eine längere Beständigkeit von 10 Tagen oder mehr erwartet wird. Auch hier ist die hohe Beständigkeit der erfindungsgemäß hergestellten Beschichtung hervorzuheben, deren Korrosionsbeständigkeit bei mindestens 1.200 Stunden liegt, die aber auch mehr als 2.000 Stunden betragen kann.

**Tabelle 2 Badstabilität bei Zusatz eines Salzes einer Säure eines Übergangsmetalls zur Beschichtungszusammensetzung der Tabelle 1. (Der Zusatz von Salzen der Säuren von Übergangsmetallen bzw. und ggf. von Phosphorsäure bewirkt eine entsprechende Verringerung des Anteils von Wasser bei der Beschichtungszusammensetzung.)**

| **Versuch** | **I** | **II** | **III** | **IV** | **V** | **VI** | **VII** | **VIII** |
|---|---|---|---|---|---|---|---|---|
| Komponente III | / | (NH₄)₆ Mo₇O₂₄ . 4H₂O | KMnO₄ | | | K₂WO₄ | | |
| Anteil an der Gesamtzusammensetzung (Gewichts-%) | / | 0,06 | 0,51 | 1,02 | 1,02 | 0,50 | 1,02 | 1,02 |
| Ortho-Phosphorsäure 85%ig (%) | / | 0,31 | 0,31 | 0,31 | / | 0,31 | 0,31 | / |
| Badstabilität bei Raumtemperatur (Tage) | 0 | 2 | 6 | 20 | 12 | 10 | 13 | 4 |
| Salzsprühtest (Stunden, Minimum) | / | | 1500 | 1500 | 1500 | 1600 | 1200 | 2000 |

Die Zugabe von Salzen von Säuren der Übergangsmetalle zu Beschichtungsmitteln für Korrosionsschutzmittel unmittelbar beim Herstellen des Tauchbades stabilisiert die Tauchbäder für einen Zeitraum von 2 bis 20 Tagen, so dass diese Salze als Ersatz für die kurzfristig nicht mehr verfügbaren Borverbindungen einsetzbar sind. Es wird deutlich, dass der gleichzeitige Einsatz von Säure, z. B. Phosphorsäure, zu einer weiteren, wesentlichen Steigerung der Badstabilität beiträgt. Gleichzeitig ist festzuhalten, dass Bleche, die mit der in Tabellen 1 und 2 offenbarten Beschichtungszusammensetzung beschichtet wurden, sehr gute Werte im Salzsprühtest zeigen.

**Tabelle 3 Badstabilität bei Zusatz eines Oxids eines Übergangsmetalls zur Beschichtungszusammensetzung der Tabelle 1. (Der Zusatz von Oxiden von Übergangsmetallen bzw. und ggf. von Phosphorsäure bewirkt eine entsprechende Verringerung des Anteils von Wasser bei der Beschichtungszusammensetzung.)**

| **Versuch** | **I** | **IX** | **X** |
|---|---|---|---|
| Komponente III | / | MnO₂ | MoO₃ |
| Anteil an der Gesamtzusammensetzung (Gewichts-%) | / | 0,25 | 0,5 |
| Ortho-Phosphorsäure 85%ig (%) | / | 0,31 | / |
| Badstabilität bei Raumtemperatur (Tage) | 0 | 5 | 7 |
| Salzsprühtest (Stunden, Minimum) | / | 1000 | |

Die Zugabe von Oxiden der Übergangsmetalle zu einem Beschichtungsmittel mit antikorrosiver Wirkung unmittelbar beim Herstellen des Tauchbades stabilisiert das Tauchbad um mehr als 5 Tage beim Versuch IX, beim Versuch X um 7 Tage. Bleche, die mit der in Tabellen 1 und 3 offenbarten Beschichtungszusammensetzung beschichtet wurden, zeigen sehr gute Werte im Salzsprühtest (MnO₂ mindestens 1.000 Stunden).

## Patentansprüche

1. Antikorrosive Beschichtungszusammensetzung, enthaltend die Komponenten:
(I) Metallpartikel
(II) Bindemittel und
(III) eine Sauerstoffverbindung oder eine Mischung von Sauerstoffverbindungen der Nebengruppenelemente in Form eines Salzes der Säure eines Übergangsmetalls oder eines Oxids eines Übergangsmetalls oder einer Mischung eines Salzes einer Säure eines Übergangsmetalls und eines Oxids eines Übergangsmetalls, wobei das Übergangsmetall ausgewählt ist aus Vanadium, Niob, Tantal, Chrom, Molybdän, Wolfram, Mangan und Rhenium,
in Gegenwart einer Flüssigkeit.

2. Beschichtungszusammensetzung nach Anspruch 1, **dadurch gekennzeichnet, dass** eine Sauerstoffverbindung der Nebengruppenelemente mit der höchsten Oxidationsstufe zugesetzt ist.

3. Beschichtungszusammensetzung nach einem der Ansprüche 1 oder 2, **dadurch gekennzeichnet, dass** der Beschichtungszusammensetzung als Sauerstoffverbindung der Nebengruppenelemente Ammonium-, Alkali- oder Erdalkalisalze einer Säure eines Übergangsmetalls einzeln oder in Mischung zugesetzt sind.

4. Beschichtungszusammensetzung nach mindestens einem der vorstehenden Ansprüche, **dadurch gekennzeichnet, dass** Ammonium- Alkali- oder Erdalkalisalze von Permanganaten, Wolframaten, Molybdaten oder Polyoxalate des Vanadiums, Niobs oder Tantals oder Mischungen dieser Salze in der Beschichtungszusammensetzung als Sauerstoffverbindung der Nebengruppenelemente eingesetzt sind.

5. Beschichtungszusammensetzung nach mindestens einem der vorstehenden Ansprüche, **dadurch gekennzeichnet, dass** ein Oxid von Mangan, Wolfram, Molybdän, Vanadium, Niob, Tantal oder Rhenium oder Mischungen dieser Oxide in der Beschichtungszusammensetzung als Sauerstoffverbindung der Nebengruppenelemente eingesetzt sind.

6. Beschichtungszusammensetzung nach mindestens einem der vorstehenden Ansprüche, **dadurch gekennzeichnet, dass** die Sauerstoffverbindung oder die Mischung von Sauerstoffverbindungen der Nebengruppenelemente in einer Menge von 0,001 Gewichts-% bis 10 Gewichts-% bezogen auf den Feststoffgehalt der Beschichtungs-Zusammensetzung eingesetzt sind.

7. Beschichtungszusammensetzung nach mindestens einem der vorstehenden Ansprüche, **dadurch gekennzeichnet, dass** Metallpartikel aus Zink, Aluminium, Magnesium oder Zinn oder Mischungen oder Legierungen von zwei oder mehr dieser Metalle in der Beschichtungszusammensetzung eingesetzt sind.

8. Beschichtungszusammensetzung nach mindestens einem der vorstehenden Ansprüche, **dadurch gekennzeichnet, dass** als Bindemittel Silane, Silikate, Silanole, titan- oder zirkonbasierte Bindemittel, Siloxane, Acrylate, Polyurethane, epoxidbasierte Bindemittel, Polyether oder Polyester einzeln oder in Mischung miteinander oder in Mischung mit anderen Bindemitteln eingesetzt sind.

9. Beschichtungszusammensetzung nach mindestens einem der vorstehenden Ansprüche, **dadurch gekennzeichnet, dass** der Beschichtungszusammensetzung ein Entschäumer, ein Netzmittel, Korrosionsschutzadditive, Pigmente, Farbstoffe, Schmiermittel, Stabilisatoren für Metallpartikel, Anti-Absetzmittel, pH-Regulatoren und/oder ein Verdicker zugesetzt ist.

10. Verwendung einer Sauerstoffverbindung der Nebengruppenelemente oder einer Mischung von Sauerstoffverbindungen der Nebengruppenelemente in Form eines Salzes der Säure eines Übergangsmetalls oder eines Oxids eines LJbergangsmetalls oder einer Mischung eines Salzes einer Säure eines Übergangsmetalls und eines Oxids eines Übergangsmetalls, wobei das Übergangsmetall ausgewählt ist aus Vanadium, Niob, Tantal, Chrom, Molybdän, Wolfram, Mangan und Rhenium, in einem antikorrosiven Beschichtungsmittel.

11. Verfahren zum Herstellen einer antikorrosiven Beschichtungszusammensetzung gemäß einem der Ansprüche 1 bis 9 mit den Schritten
- Mischen von Metallpartikeln und Bindemittel in Gegenwart von Flüssigkeit und
- Hinzufügen einer Sauerstoffverbindungen der Nebengruppenelemente oder einer Mischung von Sauerstoffverbindungen der Nebengruppenelemente in From eines Salzes der Säure eines Übergangsmetalls oder eines Oxids eines Übergangsmetalls oder einer Mischung eines Salzes einer Säure eines Übergangsmetalls und eines Oxids eines Übergangsmetalls, wobei das Übergangsmetall ausgewählt ist aus Vanadium, Niob, Tantal, Chrom, Molybdän, Wolfram, Mangan und Rhenium.

12. Verfahren nach Anspruch 11, **dadurch gekennzeichnet, dass** das Hinzufügen einer Sauerstoffverbindung der Nebengruppenelemente oder einer Mischung von Sauerstoffverbindungen der Nebengruppenelemente in Gegenwart eines oder mehrerer Additive erfolgt, oder dass ein oder mehrere Additive vor, während oder nach dem Hinzufügen der einen oder der Mischung von Sauerstoffverbindungen der Nebengruppenelemente zugesetzt werden.

13. Werkstück, beschichtet mit einer antikorrosiven Beschichtung mit Metallpartikeln, erhältlich mit der Beschichtungszusammensetzung nach einem der Ansprüche 1 bis 9, **dadurch gekennzeichnet, dass** die Beschichtung eine Sauerstoffverbindung oder eine Mischung von Sauerstoffverbindungen der Nebengruppenelemente in From eines Salzes der Säure eines Übergangsmetalls oder eines Oxids eines Übergangsmetalls oder einer Mischung eines Salzes einer Säure eines Übergangsmetalls und eines Oxids eines Übergangsmetalls, wobei das Übergangsmetall ausgewählt ist aus Vanadium, Niob, Tantal, Chrom, Molybdän, Wolfram, Mangan und Rhenium, oder Reaktionsprodukte dieser Sauerstoffverbindungen mit den Metallpartikeln aufweist.

14. Werkstück nach Anspruch 13, **dadurch gekennzeichnet, dass** die Beschichtung ein Bindemittel aufweist.

## Claims

1. Anticorrosive coating composition comprising the components:
(I) metal particles
(II) binding agent and
(III) an oxygen compound or a mixture of oxygen compounds of the subgroup elements in the form of a salt of the acid of a transition metal or of an oxide of a transition metal or a mixture of a salt of an acid of a transition metal and an oxide of a transition metal, wherein the transition metal is selected from vanadium, niobium, tantalum, chromium, molybdenum, tungsten, manganese and rhenium,
in the presence of a liquid.

2. Coating composition according to claim 1, **characterized in that** an oxygen compound of the subgroup elements having the highest oxidation state is added.

3. Coating composition according to one of the claims 1 or 2, **characterized in that** ammonium, alkali metal or alkaline earth metal salts of an acid of a transition metal are added individually or as a mixture to the coating composition as the oxygen compound of the subgroup elements.

4. Coating composition according to at least one of the preceding claims, **characterized in that** ammonium alkali metal or alkaline earth metal salts of permanganates, tungstates, molybdates or polyoxalates of vanadium, niobium or tantalum or mixtures of these salts are used in the coating composition as the oxygen compound of the subgroup elements.

5. Coating composition according to at least one of the preceding claims, **characterized in that** an oxide of manganese, tungsten, molybdenum, vanadium, niobium, tantalum or rhenium or mixtures of these oxides are used as the oxygen compound of the subgroup elements in the coating composition.

6. Coating composition according to at least one of the preceding claims, **characterized in that** the oxygen compound or the mixture of oxygen compounds of the subgroup elements is used in an amount of from 0.001 wt.-% to 10 wt.-%, based on the solids content of the coating composition.

7. Coating composition according to at least one of the preceding claims, **characterized in that** metal particles of zinc, aluminum, magnesium or tin or mixtures or alloys of two or more of these metals are used in the coating composition.

8. Coating composition according to at least one of the preceding claims, **characterized in that** the binding agents used are silanes, silicates, silanols, titanium or zirconium-based binding agents, siloxanes, acrylates, polyurethanes, epoxide-based binding agents, polyethers or polyesters, individually or as a mixture with one another, or in a mixture with other binding agents.

9. Coating composition according to at least one of the preceding claims, **characterized in that** an antifoaming agent, a wetting agent, anti-corrosive additive, pigments, dye, lubricant, stabilizer for metal particles, anti-settling agent, pH regulator and/or a thickener is added to the coating composition.

10. Use of an oxygen compound of the subgroup elements or a mixture of oxygen compounds of the subgroup elements in the form of a salt of the acid of a transition metal or of an oxide of a transition metal or a mixture of a salt of an acid of a transition metal and an oxide of a transition metal, wherein the transition metal is selected from vanadium, niobium, tantalum, chromium, molybdenum, tungsten, manganese and rhenium, in an anti-corrosive coating agent.

11. Method for producing an anti-corrosive coating composition according to one of claims 1 to 9, comprising the steps of:
- mixing metal particles and binding agent in the presence of liquid and
- adding an oxygen compound of the subgroup elements or a mixture of oxygen compounds of the subgroup elements in the form of a salt of the acid of a transition metal or an oxide of a transition metal or a mixture of a salt of an acid of a transition metal and an oxide of a transition metal, wherein the transition metal is selected from vanadium, niobium, tantalum, chromium, molybdenum, tungsten, manganese and rhenium.

12. Method according to claim 11, **characterized in that** the addition of an oxygen compound of the nabane group elements or a mixture of oxygen compounds of the subgroup elements is effected in the presence of one or more additives or wherein one or more additives are added before, during or after the addition of the one oxygen compound or the mixture of oxygen compounds of the subgroup elements.

13. Workpiece coated with an anticorrosive coating having metal particles obtainable with the coating composition according to one of claims 1 to 9, **characterized in that** the coating is an oxygen compound or a mixture of oxygen compounds of the subgroup elements in the form of a salt of the acid of a transition metal or a mixture of oxygen compounds of the subgroup elements in the form of a salt of the acid of a transition metal or of an oxide of a transition metal or a mixture of a salt of an acid of a transition metal and an oxide of a transition metal, wherein the transition metal is selected from vanadium, niobium, tantalum, chromium, molybdenum, tungsten, manganese and rhenium, or reaction products of these oxygen compounds with the metal particles.

14. Workpiece according to claim 13, **characterized in that** the coating has a binding agent.

## Revendications

1. Composition de revêtement anticorrosion, contenant en présence d'un liquide les composants :
(I) des particules métalliques
(II) des liants, et
(III) un composé oxygéné ou un mélange de composés oxygénés des éléments des groupes secondaires sous forme d'un sel de l'acide d'un métal de transition ou d'un oxyde d'un métal de transition ou d'un mélange d'un sel d'un acide d'un métal de transition et d'un oxyde d'un métal de transition, le métal de transition étant choisi parmi le vanadium, le niobium, le tantale, le chrome, le molybdène, le tungstène, le manganèse et le rhénium.

2. Composition de revêtement selon la revendication 1, **caractérisée en ce qu'**on ajoute un composé oxygéné des éléments des groupes secondaires ayant le nombre d'oxydation le plus élevé.

3. Composition de revêtement selon l'une des revendications 1 ou 2, **caractérisée en ce qu'**on ajoute à la composition de revêtement, en tant que composé oxygéné des éléments des groupes secondaires, des sels d'ammonium, d'un métal alcalin ou d'un métal alcalino-terreux d'un acide d'un métal de transition, à titre individuel ou en mélange.

4. Composition de revêtement selon au moins l'une des revendications précédentes, **caractérisée en ce qu'**on utilise dans la composition de revêtement, en tant que composé oxygéné des éléments des groupes secondaires, des sels d'ammonium, d'un métal alcalin ou d'un métal alcalino-terreux permanganates, tungstates, molybdates, ou des polyoxalates de vanadium, de niobium ou de tantale, ou des mélanges de ces sels.

5. Composition de revêtement selon au moins l'une des revendications précédentes, **caractérisée en ce qu'**on utilise dans la composition de revêtement, en tant que composé oxygéné des éléments des groupes secondaires, un oxyde de manganèse, de tungstène, de molybdène, de vanadium, de niobium, de tantale ou de rhénium, ou des mélanges de ces oxydes.

6. Composition de revêtement selon au moins l'une des revendications précédentes, **caractérisée en ce qu'**on utilise le composé oxygéné ou le mélange de composés oxygénés des éléments des groupes secondaires, en une quantité de 0,001 % en poids à 10 % en poids, en extrait sec de la composition de revêtement.

7. Composition de revêtement selon au moins l'une des revendications précédentes, **caractérisée en ce qu'**on utilise dans la composition de revêtement des particules métalliques de zinc, d'aluminium, de magnésium ou d'étain, ou des mélanges ou alliages de deux ou plus de ces métaux.

8. Composition de revêtement selon au moins l'une des revendications précédentes, **caractérisée en ce qu'**on utilise en tant que liants des silanes, des silicates, des silanols, des liants à base de titane ou de zirconium, des siloxanes, des acrylates, des polyuréthannes, des liants à base époxyde, des polyéthers ou des polyesters, à titre individuel ou en mélange les uns avec les autres ou en mélange avec d'autres liants.

9. Composition de revêtement selon au moins l'une des revendications précédentes, **caractérisée en ce qu'**on ajoute à la composition de revêtement un antimousse, un mouillant, des additifs de protection contre la corrosion, des pigments, des colorants, des lubrifiants, des stabilisants pour particules métalliques, des agents antiredéposition, des régulateurs de pH et/ou un épaississant.

10. Utilisation, dans un agent de revêtement anticorrosion, d'un composé oxygéné des éléments des groupes secondaires ou d'un mélange de composés oxygénés des éléments de groupes secondaires sous forme d'un sel de l'acide d'un métal de transition ou d'un oxyde d'un métal de transition ou d'un mélange d'un sel d'un acide d'un métal de transition et d'un oxyde d'un métal de transition, le métal de transition étant choisi parmi le vanadium, le niobium, le tantale, le chrome, le molybdène, le tungstène, le manganèse et le rhénium.

11. Procédé de fabrication d'une composition de revêtement anticorrosion selon l'une des revendications 1 à 9, comportant les étapes :
- mélange de particules métalliques et d'un liant en présence d'un liquide et
- addition d'un composé oxygéné des éléments des groupes secondaires ou d'un mélange de composés oxygénés des éléments des groupes secondaires sous forme d'un sel de l'acide d'un métal de transition ou d'un oxyde d'un métal de transition ou d'un mélange d'un sel d'un acide d'un métal de transition et d'un oxyde d'un métal de transition, le métal de transition étant choisi parmi le vanadium, le niobium, le tantale, le chrome, le molybdène, le tungstène, le manganèse et le rhénium.

12. Procédé selon la revendication 11, **caractérisé en ce que** l'addition d'un composé oxygéné des éléments des groupes secondaires ou d'un mélange de composés oxygénés des éléments des groupes secondaires s'effectue en présence d'un ou plusieurs additifs, ou que l'on ajoute un ou plusieurs additifs avant, pendant ou après l'addition du ou d'un mélange de composés oxygénés des éléments des groupes secondaires.

13. Pièce en oeuvre, revêtue d'un revêtement anticorrosion comportant des particules métalliques, pouvant être obtenues avec la composition de revêtement selon l'une des revendications 1 à 9, **caractérisée en ce que** le revêtement présente un composé oxygéné ou un mélange de composés oxygénés des éléments des groupes secondaires sous forme d'un sel de l'acide d'un métal de transition ou d'un oxyde d'un métal de transition ou d'un mélange d'un sel d'un acide d'un métal de transition et d'un oxyde d'un métal de transition, le métal de transition étant choisi parmi le vanadium, le niobium, le tantale, le chrome, le molybdène, le tungstène, le manganèse et le rhénium, ou des produits de la réaction de ces composés oxygénés avec les particules métalliques.

14. Pièce en oeuvre selon la revendication 13, **caractérisée en ce que** le revêtement présente un liant.
